# EUROPÄISCHE PATENTANMELDUNG

(11) **EP 2 505 740 A1**
(43) Veröffentlichungstag der Anmeldung: **03.10.2012**
(21) Anmeldenummer: 12159471.7
(22) Anmeldetag: 14.03.2012
(51) Int. Cl.: E04F 15/10, B29C 47/06, B29C 47/00

(54) **Platte für einen Bodenbelag**

(30) Priorität: 28.03.2011 DE 102011001588
(71) Anmelder: Novo-Tech GmbH & Co. KG, 06449 Aschersleben (DE)
(72) Erfinder:
(74) Vertreter: Dantz, Jan Henning

(57) **Zusammenfassung**

Eine Platte (1,1') für einen Bodenbelag umfasst einen extrudierten Formkörper (2,2') aus einer Mischung aus Naturfasern und einem Polymerwerkstoff, wobei an einer Oberfläche (6) der Platte (1,1') zumindest bereichsweise ein gegenüber dem Formkörper (2,2') weicheres rutschhemmendes Material (9,9') angeordnet ist. Dadurch kann die Platte (1,1') insbesondere als Transportboden für Fahrzeuge eingesetzt werden.

## Beschreibung

Die vorliegende Erfindung betrifft eine Platte mit einem Bodenbelag, insbesondere einen Transportboden, mit einem extrudierten Formkörper aus einer Mischung aus Naturfasern und einem Polymerwerkstoff.

Zur Bereitstellung eines Transportbodens ist es bekannt, Siebdruckplatten aus verleimtem Schichtholz einzusetzen, die mit einer dünnen Kunststoffhaut überzogen sein können. Bei solchen Siebdruckplatten besteht das Problem, dass die Kunststoffhaut durch hervorstehende Nägel oder kleinen Steinen beim Verschieben leicht beschädigt wird und dadurch Wasser in die Holzschichten eindringt, die dann aufquellen. Die Beständigkeit solcher Siebdruckplatten ist daher begrenzt. Zudem besteht der Nachteil, dass die Rutschhemmung begrenzt ist durch einen niedrigen Reibungskoeffizienten von meist etwa 0,3. Dieser kann durch Auflegen einer Anti-Rutsch-Matte zwar erhöht werden, allerdings kann die lose aufgelegte Matte beim Beladen verrutschen und somit die Funktion verlieren.

Die DE 10 2008 056 118 offenbart einen Transportboden, der aus extrudierten Formkörpern hergestellt ist. Die Formkörper bestehen aus einer Mischung aus Naturfasern und einem Polymerwerkstoff. Dieses Material hat sich hinsichtlich der Witterungsbeständigkeit an sich bewährt, allerdings besteht auch hier das Problem des leichten Verrutschens von Gegenständen, sodass das Ladegut vergleichsweise aufwendig gesichert werden muss.

Es ist daher Aufgabe der vorgehenden Erfindung eine Platte, insbesondere für einen Transpartboden zu schaffen, die eine große Rutschhemmung aufweist und witterungsbeständig ist.

Zur Lösung dieser Aufgabe wird eine Platte mit den Merkmalen des Anspruches 1 vorgeschlagen.

Erfindungsgemäß umfasst die Platte einen extrudierten Formkörper aus einer Mischung aus Naturfasern und einem Polymerwerkstoff, der eine hohe Witterungsbeständigkeit aufweist. Der Formkörper ist so ausgebildet, dass durch Feuchtigkeit kein Aufquellen der Naturfasern erfolgt. Zudem ist an einer Oberfläche der Platte, zumindest bereichsweise, ein gegenüber dem Formkörper weicheres rutschhemmendes Material angeordnet, das die Oberfläche deutlich rutschhemmender gestaltet. Dadurch kann die Platte insbesondere als Transportboden eingesetzt werden, was die notwendige Anzahl von Zurrgurten und anderen Befestigungsmittel verringern kann und zu kürzeren Belade- und Entladezeiten führt.

Gemäß einer bevorzugten Ausgestaltung der Erfindung steht das weichere rutschhemmende Material gegenüber der Oberfläche des Formkörpers hervor. Dadurch wird gewährleistet, dass die Ladung in jedem Fall mit dem weicheren rutschhemmenden Material in Berührung kommt. Das weichere rutschhemmende Material kann beispielsweise in einem Bereich zwischen 0,2 bis 2 mm von der Oberfläche des Formkörpers hervorstehen.

Vorzugsweise ist das weichere rutschhemmende Material in den Formkörper eingebettet. Dadurch ist gewährleistet, dass das rutschhemmende Material nicht durch die Ladung aus dem Formkörper herausgerissen werden kann, sodass die Rutschhemmung nicht mehr gegeben ist.

Der Reibungskoeffizient der Platte an der Oberseite mit dem rutschhemmenden Material ist vorzugsweise größer als 0,5, insbesondere größer als 0,6. Dadurch kann gerade für den Transport von Gegenständen eine erhebliche Verringerung der notwendigen Zurrgurte erreicht werden, da die Ladung schon aufgrund von Reibkräften weitgehend gehalten ist. Der Reibungskoeffizient an der Oberseite kann dabei durch entsprechende Messgeräte ermittelt werden. Gemäß einer weiteren Ausgestaltung der Erfindung sind an dem FormKörper Nuten ausgebildet, die jeweils einen Streifen aus dem weicheren rutschhemmenden Material eingefügt ist. Die Nuten weiten sich vorzugsweise zum Boden hin auf, sodass ein Herausziehen der Streifen erschwert wird. Für eine sichere Befestigung der Streifen an dem Formkörper ist die Platte, vorzugsweise durch Koextrusion hergestellt, sodass während der Extrusion des Formkörpers auch die Streifen aus dem weicheren Material durch Koextrusion eingebracht werden. Dadurch wird eine besonders stabile Verbindung zwischen dem weicheren rutschhemmenden Material und dem Formkörper erhalten.

Gemäß einer bevorzugten Ausgestaltung ist das weichere rutschhemmende Material aus einem zumindest teilweise elastischen Polymerwerkstoff hergestellt. Wenn der Formkörper und das weichere rutschhemmende Material denselben Polymerwerkstoff erhalten, vorzugsweise Polypropylen und/oder Polyethylen, kann das Material besonders gut wiederverwendet werden. Denn dann kann die Platte nach dem Gebrauch geschreddert und erneut einem Herstellungsprozess zugeleitet werden.

Für eine kostengünstige Herstellung der Platte ist der Anteil an Naturfasern in dem Formkörper zumindest über 50 %, vorzugsweise über 60 %. Auch höhere Anteile von 70 % und mehr sind möglich.

Das weichere rutschhemmende Material hingegen weist vorzugsweise weniger als 5 % Naturfasern auf, es können auch überhaupt keine Naturfasern in dem Material enthalten sein.

Als Naturfasern werden vorzugsweise lignocellulosehaltige Fasern, wie Holzspäne, Reisschalen oder andere Fasern aus nachwachsenden Rohstoffen eingesetzt.

Für eine gute Lastabstützung weist der Formkörper vorzugsweise mehrere Hohlkammern auf, die über Stege voneinander getrennt sind.

Die erfindungsgemäße Platte wird vorzugsweise für einen Transportboden für Fahrzeuge oder Schiffe eingesetzt. Aber auch ein Einsatz als Bodenbelag im Innen- oder Außenbereich ist möglich.

Die Erfindung wird nachfolgend anhand zweier Ausführungsbeispielen mit Bezug auf die beigefügten Zeichnungen näher erläutert. Es zeigen:

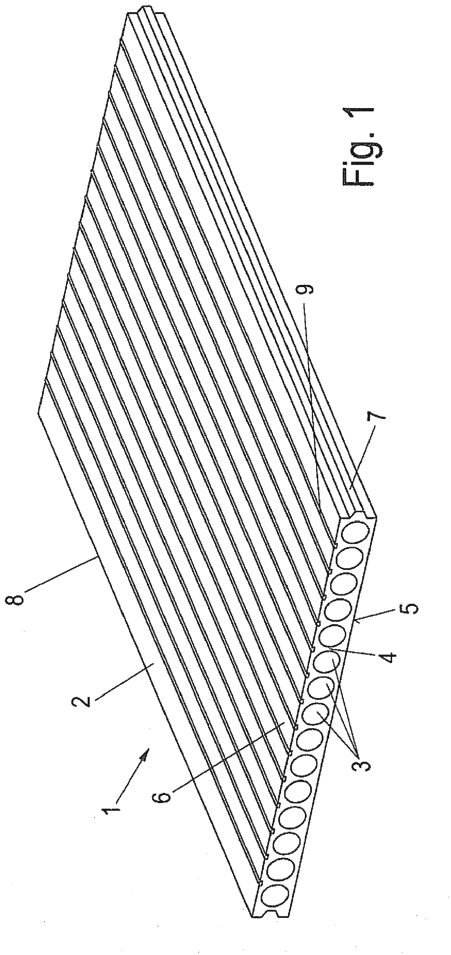

- Figur 1:: eine perspektivische Ansicht einer erfindungsgemäßen Platte;
- Figur 2:: eine Detailansicht der Platte der Figur 1;
- Figur 3:: eine perspektivische Ansicht einer modifizierten Platte, und
- Figur 4:: eine Detailansicht der Platte der Figur 3.

Eine Platte 1 umfasst einen Formkörper 2 aus einem extrudierten Material aus einer Mischung aus Naturfasern und einem Polymerwerkstoff, wobei der Anteil an Naturfasern vorzugsweise über einen Bereich zwischen 60 % bis 90 %, insbesondere 70 % bis 80 % liegt. Als Polymerwerkstoff kann beispielsweise Polypropylen oder ein anderer Polymerwerkstoff eingesetzt werden.

Der Formkörper 2 ist plattenförmig ausgebildet und weist mehrere kreisförmige Hohlkammern 3 auf, die über Stege 4 voneinander getrennt sind. Die Platte 1 weist eine Unterseite 5 zur Fixierung an einem Unterboden sowie eine Oberfläche 6 auf, die zur Aufnahme von Gegenständen oder als Trittfläche dient. Die Platte 1 ist an einer Längskante mit einer Feder 7 versehen, während an einer gegenüber liegenden Längskante 8 eine entsprechende Nut ausgebildet ist, in welche die Feder 7 eingefügt werden kann.

An der Oberseite 6 der Platte 1 sind eine Vielzahl paralleler Streifen 9 aus einem weicheren rutschhemmenden Material angeordnet, die den Reibungskoeffizienten der Oberseite 6 erheblich erhöhen. Während der Formkörper 2 ohne das weichere rutschhemmende Material einen Reibungskoeffizienten von etwa 0,25 bis 0,4 aufweist, so wird die Oberseite 6 erfindungsgemäß ein Reibungskoeffizienten größer 0,5 insbesondere größer 0,6.

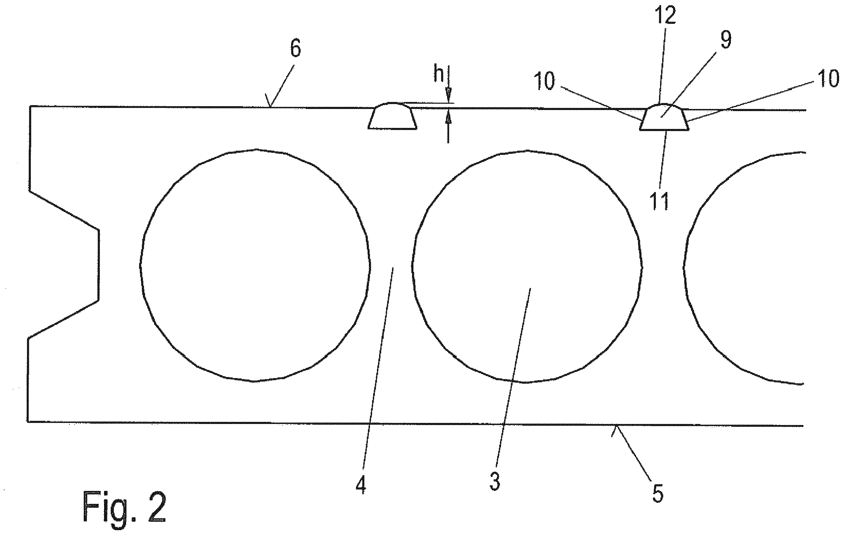

Wie in Figur 2 gezeigt ist, sind die Streifen 9 jeweils in einer Nut an der Oberseite 6 des Formkörpers 2 eingebettet. Die Nut weist dabei Nutwände 10 auf, die keilförmig zu einem Boden 11 der Nut hin aufspreizen. Die Streifen 9 stehen dabei mit einer Oberseite 12 über die Oberfläche 6 des Formkörpers 2 in die Höhe h hervor. Die Streifen 9 können die Oberfläche 6 in einem Bereich zwischen 0,2 mm und 2 mm überragen, sodass gewährleistet ist, dass ein Gegenstand in jedem Fall auf der Oberfläche 12 zur Auflage kommt. Der Abstand zweier benachbarter Streifen 9 kann dabei in einem Bereich zwischen 2 cm und 10 cm, vorzugsweise 4 cm bis 8 cm liegen.

Die Herstellung der Platte 1 erfolgt beispielsweise in einem Koextrusionsverfahren hierfür werden zunächst die Naturfasern mit dem Polymerwerkstoff gemischt und in einem ersten Schritt extrudiert. Sobald die Vorform des Formkörpers 2 erreicht ist, an dem an der Oberseite 6 Nuten ausgebildet sind, können an der Oberseite 6 Düsen vorgesehen sein, durch die das weichere rutschhemmende Material 9 zugeführt wird, sodass das Material streifenförmig in den Formkörper 2 eingebettet wird.

Die Streifen 9 aus dem weicheren rutschhemmenden Material sind vorzugsweise elastisch ausgebildet und enthalten denselben Polymerwerkstoff, vorzugsweise Polypropylen, wie der Formkörper 2. Dadurch kann die Platte 1 nach Gebrauch leichter wieder verwendet werden.

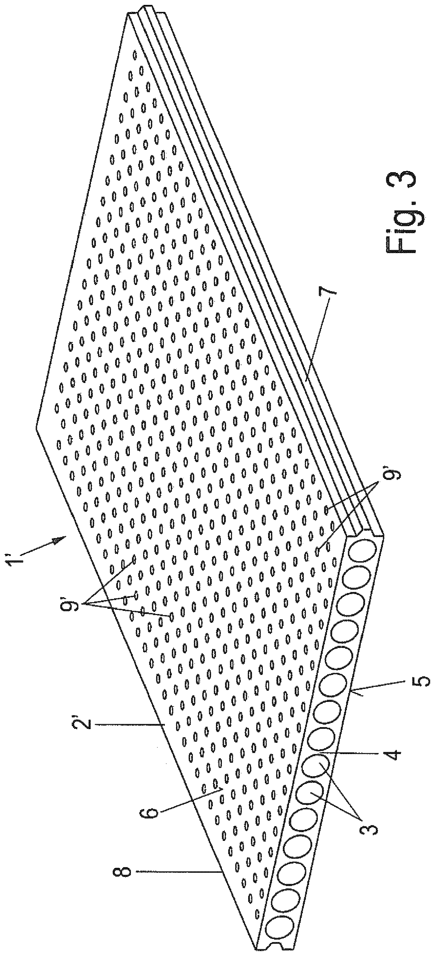

In Figur 3 ist ein modifiziertes Ausführungsbeispiel einer Platte 1' dargestellt, bei der ein Formkörper 2' vorgesehen ist, der im Wesentlichen den vorhergehenden Ausführungsbeispiel entspricht. Der Formkörper 2' weist im Querschnitt kreisförmige Hohlkammern 3 auf, die über Stege 4 von einander getrennt sind.

An einer Oberseite 6 der Formkörper 2' sind mehrere kreisförmige Punkte 9' auf einem weicheren rutschhemmenden Material angeordnet. Die Punkte 9' aus dem weicheren rutschhemmenden Material sind ebenfalls an der Oberfläche 6 des Formkörpers 2' eingebettet, allerdings nicht durch Koextrusion hergestellt, sondern in einem anderen Press- oder Prägeverfahren.

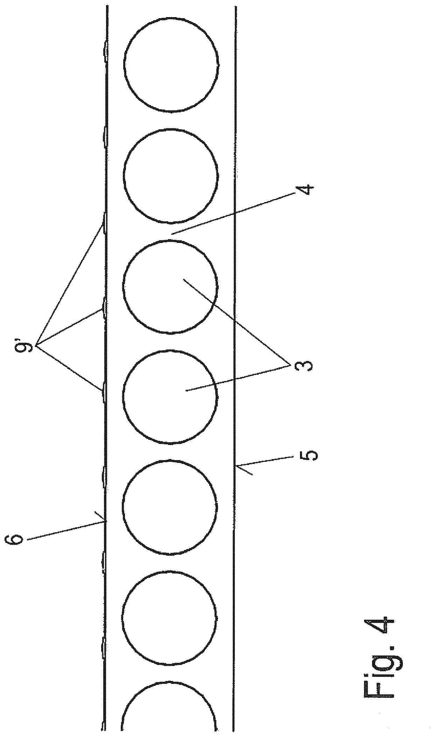

Wie in Figur 4 gezeigt ist, stehen auch die Punkte 9' aus dem weicheren rutschhemmenden Material an der Oberseite 6 des Formkörpers 2' geringfügig hervor. Auch dadurch wird gewährleistet, dass der zu transportierende Gegenstand zumindest bereichsweise auf dem weicheren rutschhemmenden Material aufliegt.

Die Anordnungen des rutschhemmenden Materials an der Oberseite 6 des Formkörpers 2 bzw. 2' kann in weiten Bereichen variiert werden. Statt der gezeigten streifenförmigen Form und der punktförmigen Anordnung des weicheren rutschhemmenderen Materials sind auch andere Formen denkbar. Insbesondere ist es auch möglich, den Formkörper 2 vollflächig mit einer rutschhemmenden Schicht aus einem weicheren rutschhemmenden Material zu überziehen. Auch eine Profilierung des Formkörpers 2 durch Rippen oder Rillen ist möglich.

### Bezugszeichenliste

- 1': Platte
- 1: Platte
- 2': Formkörper
- 2: Formkörper
- 3: Hohlkammer
- 4: Stege
- 5: Unterseite
- 6: Oberfläche
- 7: Feder
- 8: Längskante
- 9: Parallele Streifen
- 9': Rutschhemmendes Material
- 9': Kreisförmige Punkte
- 10: Nutwände
- 11: Boden
- 12: Oberseite

## Patentansprüche

1. Platte (1,1') für einen Bodenbelag, insbesondere einen Transportboden, mit einem extrudierten Formkörper (2,2') aus einer Mischung aus Naturfasern und einem Polymerwerkstoff, **dadurch gekennzeichnet, dass** an einer Oberfläche (6) der Platte (1,1') zumindest bereichsweise ein gegenüber dem Formkörper (2,2') weicheres rutschhemmendes Material (9,9') angeordnet ist.

2. Platte nach Anspruch 1, **dadurch gekennzeichnet, dass** das weichere rutschhemmende Material (9,9') gegenüber der Oberfläche (6) dem Formkörper (2,2') hervorsteht.

3. Platte nach Anspruch 1 oder 2, **dadurch gekennzeichnet, dass** das weichere rutschhemmende Material (9,9') in den Formkörper (2,2') eingebettet ist.

4. Platte nach einem der vorhergehenden Ansprüche, **dadurch gekennzeichnet, dass** der Reibungskoeffizient der Platte (1,1') an der Oberseite mit dem rutschhemmenden Material (9,9') größer als 0,4, vorzugsweise größer als 0,6 ist.

5. Platte nach einem der vorhergehenden Ansprüche, **dadurch gekennzeichnet, dass** an dem Formkörper (2) Nuten ausgebildet sind, in die jeweils ein Streifen aus dem weicheren rutschhemmenden Material (9) eingefügt ist.

6. Platte nach Anspruch 5, **dadurch gekennzeichnet, dass** die Nuten sich zum Boden hin aufweiten.

7. Platte nach einem der vorhergehenden Ansprüche, **dadurch gekennzeichnet, dass** die Platte (1) durch Koextrusion hergestellt ist.

8. Platte nach einem der vorhergehenden Ansprüche, **dadurch gekennzeichnet, dass** das weichere rutschhemmende Material (9,9') aus einem zumindest teilweise elastischem Polymerwerkstoff hergestellt ist.

9. Platte nach einem der vorhergehenden Ansprüche, **dadurch gekennzeichnet, dass** der Formkörper (2,2') und das weichere rutschhemmende Material (9,9') demselben Polymerwerkstoff enthalten, vorzugsweise Polypropylen.

10. Platte nach einem der vorhergehenden Ansprüche, **dadurch gekennzeichnet, dass** der Anteil an Naturfasern im Formkörper (2,2') zumindest teilweise über 50 %, vorzugsweise über 60 % beträgt.

11. Platte nach einem der vorhergehenden Ansprüche, **dadurch gekennzeichnet, dass** das weichere rutschhemmende Material (9,9') weniger als 5 % Naturfasern enthält

12. Platte nach einem der vorhergehenden Ansprüche, **dadurch gekennzeichnet, dass** als Naturfasern lignocellulosehaltige Fasern, Holzspäne, Reisschalen oder andere Fasern aus nachwachsenden Rohstoffen eingesetzt werden.

13. Platte nach einem der vorhergehenden Ansprüche, **dadurch gekennzeichnet, dass** der Formkörper (2,2') mehrere Hohlkammern (3), aufweist, die über Stege (4) voneinander getrennt sind.

14. Transportboden, insbesondere für Fahrzeuge oder Schiffe, **dadurch gekennzeichnet, dass** der Transportboden mindestens eine Platte (1,1') nach einem der vorhergehenden Ansprüche aufweist.
